# EUROPÄISCHE PATENTSCHRIFT

(11) **EP 2 804 834 B1**
(45) Veröffentlichungstag und Bekanntmachung des Hinweises auf die Patenterteilung: **27.04.2016**
(21) Anmeldenummer: 12812865.9
(22) Anmeldetag: 21.12.2012
(51) Int. Cl.: C01B 21/26

(54) **VERFAHREN UND VORRICHTUNG ZUR HERSTELLUNG VON SALPETERSÄURE**
METHOD AND DEVICE FOR PRODUCING NITRIC ACID
PROCÉDÉ ET DISPOSITIF POUR PRODUIRE DE L'ACIDE NITRIQUE

(30) Priorität: 16.01.2012 DE 102012000570
(43) Veröffentlichungstag der Anmeldung: 26.11.2014
(73) Patentinhaber: ThyssenKrupp Industrial Solutions AG, 45143 Essen (DE)
(72) Erfinder: BIRKE, Daniel, 49326 Melle (DE)
(74) Vertreter: ThyssenKrupp Intellectual Property GmbH
(86) Internationale Anmeldenummer: PCT/EP2012/005331
(87) Internationale Veröffentlichungsnummer: WO 2013/107490

(56) Entgegenhaltungen:
- WO-A1-01/68520
- US-A- 4 869 890

## Beschreibung

Die vorliegende Erfindung betrifft ein Verfahren zur Herstellung von Salpetersäure, im Rahmen dessen beim An- und Abfahren der Anlage eine ausgewählte Steuerung zum Einsatz gelangt. Die Erfindung betrifft auch eine entsprechend modifizierte Anlage zur Herstellung von Salpetersäure. Das erfindungsgemäße Verfahren bzw. die erfindungsgemäße Anlage gestatten ein problemloses An- und Abfahren von Salpetersäureanlagen, auch von solchen Anlagen, die mit Hochleistungs-Restgasexpandern ausgestattet sind.

Salpetersäure ist ein wichtiger Grundstoff der chemischen Industrie und dient beispielsweise als Grundlage zur Herstellung von Düngemittel, Explosivstoffen, sowie zur Nitrierung von organischen Stoffen bei der Herstellung von Farbstoffen und Desinfektionsmitteln.

Seit Anfang des 20. Jahrhunderts wird Salpetersäure nach dem sogenannten Ostwaldverfahren hergestellt, auf dem bis heute die industrielle Herstellung im Großmaßstab beruht. Bei dieser Reaktion handelt es sich um eine katalytische Reaktion von Ammoniak. Das entstehende Stickstoffmonoxid reagiert zu Stickstoffdioxid, aus dem durch Reaktion mit Wasser Salpetersäure entsteht, die in Rieseltürmen abgetrennt werden kann. Dieser Prozess ist in der Publikation "Anorganische Stickstoffverbindungen" von Mundo/Weber, Carl Hanser Verlag München Wien 1982, sowie in der WO 01/68520 A1 beschrieben.

Zur Herstellung von Salpetersäure wird allgemein zunächst Ammoniak NH₃ mit Luft reaktiv umgesetzt und Stickoxid NO erzeugt, welches dann zu Stickstoffdioxid NO₂ aufoxidiert wird.

Anschließend wird das so gewonnene Stickstoffdioxid NO₂ in Wasser absorbiert und es entsteht die Salpetersäure. Damit möglichst viel von dem gewonnenen Stickstoffdioxid NO₂ von Wasser absorbiert wird, geschieht die Absorption in der Regel bei erhöhtem Druck, vorzugsweise bei Drucken zwischen 4 bis 14 bar.

Der für die Umsetzung des als Rohstoff eingesetzten Ammoniaks benötigte Sauerstoff wird in der Regel in Form von Luftsauerstoff zugeführt. Zum Zwecke der Zuführung wird die Prozessluft in einem Kompressor verdichtet und auf einen Druck gebracht, der sowohl der Oxidationsreaktion wie auch der Absorptionsreaktion angepasst ist.

Üblicherweise wird die Energie zur Kompression der Luft einerseits mittels Entspannung des aus der Absorption austretenden Restgases in einem Restgasexpander auf Umgebungsdruck und andererseits durch die Verwertung der bei den Umsetzungen freigesetzten Wärmen gewonnen. Die in verschiedenen Ausführungen errichteten Salpetersäureanlagen sind an die jeweiligen speziellen Anforderungen ihres jeweiligen Standortes angepasst.

Dabei kann die Herstellung von Salpetersäure im Eindruck- oder im Zweidruckverfahren erfolgen. Im Eindruckverfahren wird sowohl die Verbrennung als auch die Absorption bei Mitteldruck (< 8 bar) oder Hochdruck (> 8 bar) durchgeführt.

Eindruckverfahren kommen insbesondere dann zum Einsatz wenn die geforderte Tagesproduktion gering ist. In diesen Fällen wird die Salpetersäureanlage vorzugsweise nach dem MonoHochdruck-Verfahren oder nach dem Mono Mitteldruck-Verfahren betrieben. Beim Mono Hochdruck-Verfahren erfolgen die Verbrennung des Ammoniaks und die Absorption der Stickstoffoxide bei etwa gleichem Druck von > 8 bar. Der Vorteil des Mono Hochdruck-Verfahrens liegt darin, dass eine kompakte Bauweise gewährleistet wird.

Beim Mono Mitteldruck-Verfahren erfolgen die Verbrennung des Ammoniaks und die Absorption der Stickstoffoxide bei etwa gleichem Druck von < 8 bar. Der Vorteil des Mono Mitteldruck-Verfahrens liegt darin, dass eine optimale Verbrennungsausbeute gewährleistet wird.

Sind hingegen große Nenn-Kapazitäten und/oder höhere Säurekonzentrationen gefordert, so stellt eine nach dem Zweidruckverfahren ausgeführte Salpetersäureanlage die wirtschaftlichere Lösung dar. Beim Zweidruckverfahren geschieht die Verbrennung des eingesetzten Ammoniaks bei einem ersten Druck, nämlich bei einem - verglichen mit dem Absorptionsdruck - niedrigerem Druck. Die bei der Verbrennung gebildeten, nitrosen Gase, auch Nitrosegas genannt, werden allgemein nach der Kühlung mittels Nitrosegasverdichtung auf den zweiten Druck, den Absorptionsdruck gebracht. Der Vorteil des Zweidruck-Verfahrens liegt darin, dass die Druckstufen den jeweiligen Reaktionen angepasst sind und somit sowohl eine optimale Verbrennungsausbeute als auch eine kompakte Absorption gewährleist wird.

Allgemein umfassen die Anlagen zur Durchführung der vorstehend diskutierten Verfahren mindestens einen Luftverdichter sowie mindestens eine Expansionsturbine für das Restgas (auch "Restgasturbine" genannt).

Solche Anlagen sind beispielsweise aus der WO 2009/146785 A1, der WO 2011/054928 A1 und US 4869890 bekannt.

Im Gegensatz zum stationären Betrieb arbeiten beim An- und Abfahrprozess von Salpetersäureanlagen die vorhandenen Aggregate nicht unter Normalbedingungen und erfordern häufig eine zusätzliche Regelung.

Beim Anfahren aus dem abgeschalteten/kalten Zustand wird in der Regel zunächst die Salpetersäureanlage unter dem Import von Fremdenergie (z.B. Fremddampf oder Strom) mit Luft gefüllt ("Luftbetrieb"). Erste Emissionen von NOₓ entstehen, sobald der Absorptionsturm während des Anfahrprozesses mit Salpetersäure aus einem Vorlagebehälter gefüllt wird und die in der Säure enthaltenen Stickoxide durch die Luft ausgeblasen werden, wobei in heutigen Anlagen das während des Füllvorgangs entstehende NOₓ emittiert wird. Mit dem Beenden des Füllvorgangs erlischt dann auch zunächst die NOₓ-Emission bis die NH₃-Oxidation der Salpetersäureanlage gestartet ("gezündet") wird. Nach dem Zünden steigen Temperatur und NOₓ-Konzentration in der Anlage stetig auf den stationären Betriebswert und die einzelnen Anlagenteile können ab einem bestimmten Zeitpunkt planmäßig betrieben werden.

Beim Abfahren der Salptersäureanlage wird zunächst die NH₃-Oxidation gestoppt. Die NOₓ-Konzentration am Ausgang des Absorptionsturmes nimmt stetig ab und parallel dazu fällt die Temperatur. Auch hier können ab einem gewissen Zeitpunkt einzelne Anlagenteile nicht mehr planmäßig betrieben werden, da die stationären Betriebswerte nicht mehr einzuhalten sind.

Aus Dutch Notes on BAT for the Production of Nitric Acid, Final Report, Ministry of Housing, Spatial Planning and the Environment: The Hague, NL, 1999 ist bekannt, die NOₓ-Emissionen während des Anfahrens und des Herunterfahrens durch Erwärmung des Restgases zu vermindern. Darüber hinaus erhält der Fachmann die Anregung, dieses mittels eines Dampferhitzers zu realisieren.

Beim Betrieb der Salpetersäureanlage ist es wünschenswert, einen hohen Wirkungsgrad der Restgasturbine zu erreichen, um die Betriebskosten zu senken. Dazu muss die Eintrittstemperatur des Mediums, welches die Restgasturbine durchströmt, während des Anfahr- oder Abfahrvorgangs der Anlage so hoch sein, dass die aus der Restgasturbine austretenden Gase nicht gefrieren. Insbesondere bei Restgasturbinen mit hohem Wirkungsgrad besteht eine verstärkte Gefahr des Einfrierens, denn eine Restgasturbine mit verbessertem Wirkungsgrad kühlt im Gegensatz zu einer herkömmlichen Restgasturbine das sie durchströmende Medium bei gleicher Eintrittstemperatur wesentlich stärker ab.

Im Gegensatz zum Normalbetrieb der Anlage ist die Eintrittstemperatur des die Restgasturbine durchströmenden Mediums während des Anfahrens und / oder Abfahrens meistens geringer.

Daher wird der Wirkungsgrad der Restgasturbine durch das sie durchströmende Medium beim Anfahren und/oder Abfahren begrenzt, um das Einfrieren der Restgasturbine während des Anfahrens und / oder Abfahrens zu vermeiden.

Insbesondere bei Anlagen, die Restgasturbinen mit besonders hohem Wirkungsgrad enthalten, muss zumindest während der An- und Abfahrphase der Anlage das auf der Restgasseite befindliche Medium, das in die Restgasturbine eingespeist wird, erhitzt werden.

Eine Aufgabe der vorliegenden Erfindung besteht darin, die bekannten Eindruck- und Zweidruckverfahren zur Herstellung von Salpetersäure dahingehend zu optimieren, dass die oben dargelegten Probleme beim An- oder Abfahren dieser Anlagen vermieden werden können. Ferner besteht eine Aufgabe der Erfindung darin, Anlagen zur Durchführung derartiger Verfahren zur Verfügung zu stellen und einen Einsatz von Restgasturbinen mit höherem Wirkungsgrad zu ermöglichen um dadurch die Betriebskosten zu senken.

Ein weiterer Vorteil der vorliegenden Erfindung ist, dass beim Einsatz eines herkömmlichen Expanders, ein farbloses Anfahren von Salpetersäureanlagen ermöglicht werden kann, da das Restgas soweit erhitzt wird, so dass die Restgasreinigung frühzeitig gestartet werden kann.

Die Erfindung betrifft ein Verfahren zum Anfahren und/oder Abfahren einer Anlage zur Herstellung von Salpetersäure aus Ammoniak und sauerstoffhaltigem Gas nach dem Eindruck- oder Zweidruckverfahren, bei dem die Oxidation des eingesetzten Ammoniaks mittels verdichteter Prozessluft an einem Katalysator geschieht, die in mindestens einem Verdichter (6) verdichtet wurde, das durch die Verbrennung gebildete Nitrosegas in ein oder mehreren mit Rohrschlangen für ein Kühlmedium ausgestatteten Prozessgaskühlern (3) sowie in ein oder mehreren mit Rohrschlangen für ein Kühlmedium ausgestatteten Speisewasservorwärmern (2) (auch "Economiser" genannt) gekühlt wird und daran anschließend das gekühlte Nitrosegas mindestens teilweise von Wasser absorbiert wird, wodurch Salpetersäure entsteht, und das nicht absorbierte Restgas zwecks Gewinnung von Verdichterarbeit in mindestens einer Restgasturbine (11) expandiert wird.

Das erfindungsgemäße Verfahren ist dadurch gekennzeichnet, dass während des Anfahrens und/oder des Abfahrens der Salpetersäureanlage der Prozessgaskühler (3) und der Speisewasservorwärmer (2) von einem Prozessgas, insbesondere Luft, durchströmt werden, welches im Prozessgaskühler (3) und/oder im Speisewasservorwärmer (2) erhitzt wird, indem mindestens eine der Rohrschlangen im Prozessgaskühler (3) und/oder im Speisewasservorwärmer (2) mit einem Heizmedium beaufschlagt wird, und das erhitzte Prozessgas durch mindestens einen dem Prozessgaskühler (3) und/oder dem Speisewasservorwärmer (2) nachgeschalteten Wärmetauscher (5, 4) geführt wird, um Wärmeenergie von dem erhitzten Prozessgas auf das Restgas, das der mindestens einen Restgasturbine (11) zugeführt wird, zu übertragen.

Im erfindungsgemäßen Verfahren wird beim Anfahren und/oder beim Abfahren der Anlage die Restgasturbine(n) (11) von einem Restgas durchströmt, das durch Wärmetausch mit dem erhitzten Prozessgas, welches den mindestens einen Prozessgaskühler (3) und/oder den mindestens einen Speisewasservorwärmer (2) durchströmt hat, erhitzt worden ist.

Die vorliegende Erfindung ist somit dadurch gekennzeichnet, dass die Erhitzung des auf der Restgasseite befindlichen Mediums, d.h. des Restgases, indirekt mit Hilfe des in der Anlage vorhandenen Prozessgaskühlers (3) und/oder mit Hilfe des in der Anlage vorhandenen Economisers (2) und jeweils nachgeschalteten Wärmetauschern (5, 4) erfolgt.

Beim An- und Abfahrvorgang werden sowohl der/die Prozessgaskühler (3) als auch der/die Economiser (2) in umgekehrter Reihenfolge betrieben; das bedeutet, dass die eigentliche Funktion als Kühler des Prozessgases (beim Luftbetrieb also Luft) nicht verwirklicht wird, sondern dass diese Apparate im Gegenteil zeitweilig als Erhitzer des Prozessgases geschaltet werden.

Ein typischer Prozessgaskühler (3) weist in der Regel im Innern verschiedene Rohrschlangen (auch "Coils" genannt) auf, durch welche im stationären Betrieb das Kühlmittel transportiert wird (18, 19, 20). Dabei handelt es sich beispielsweise um Vorverdampfer-Rohrschlagen (18), Überhitzer-Rohrschlangen (19) und um Verdampfer-Rohrschlangen (20). Gegebenenfalls können Teile dieser Rohrschlangen entfallen und/oder die Reihenfolge der Anordung dieser Rohrschlangen kann variieren.

Das Prozessgas durchströmt im stationären Betrieb das Innere des Prozessgaskühlers (3) und gibt einen Teil seiner thermischen Energie an das Kühlmittel in den Rohrschlangen (18, 19, 20) ab. Beim An- und Abfahrbetrieb der Anlagen kann durch diese Rohrschlangen (18, 19, 20) anstelle eines Kühlmitteis ein Wärmeträgerfluid geleitet werden, was das Fluid im Innern des Prozessgaskühlers (3) erwärmt anstatt dieses abzukühlen. Dabei können einzelne, mehrere oder auch alle dieser Rohrschlangen (18, 19, 20) mit dem Wärmeträgerfluid beaufschlagt werden. In einer alternativen Variante kann der Prozessgaskühler (3) auch mit zusätzlichen Rohrschlangen (21) ausgestattet sein, durch die im An- und Abfahrbetrieb der Anlage Heizmedium geleitet wird, wobei durch die übrigen Rohrschlangen (18,19, 20) ebenfalls ein solches Heizmedium geleitet wird oder die übrigen Rohrschlangen (18, 19, 20) stillgelegt werden bzw. mit dem aus dem stationären Betrieb vorhandenen Medium betrieben werden. Auf jeden Fall muss im An- und Abfahrbetrieb erfindungsgemäß ein Erhitzen des den Prozessgaskühler (3) durchströmenden Prozessgases erfolgen.

Dazu können zusätzliche und/oder bestehende Rohrschlangen oder Teile davon (18, 19, 20, 21) im Prozessgaskühler (3) während des Anfahr- und/oder des Abfahrvorgangs mit Quellen für Heizmedien verbunden sein, beispielsweise mit heißen von außen zugeführten Heizmedien, z.B. mit zugeführtem überhitztem oder gesättigtem Dampf, beaufschlagt werden. Dadurch wird die Temperatur des auf der NO-Gasseite befindlichen durch den/die Prozessgaskühler (3) strömenden Prozessgases (beim Anfahren im Allgemeinen Luft) erhöht. Das erhitzte Prozessgas (z.B. Luft) gibt dann seine Wärmeenergie in einem nachgeschalteten Wärmetauscher (5) an die Restgasseite ab, wodurch das Restgas auf der Restgasseite, auf die von der mindestens einen Restgasturbine (11) benötigte Eintrittstemperatur erhitzt wird.

In einer bevorzugten Ausführungsform des erfindungsgemäßen Verfahrens werden zwecks verbesserter Wärmeübertragung neben den zusätzlichen Rohrschlangen (21) die bestehenden Rohrschlangen (18, 19, 20) des Prozessgaskühlers (3) während des Anfahr- und/oder des Abfahrvorgangs mit Sattdampf und/oder mit siedendem Wasser aus einer Dampftrommel (8) und/oder aus einem externen System erhitzt. Hierzu muss die Dampftrommel (8) und/oder das externe System im Vorfeld des Anfahrens und/oder des Abfahrens in Betrieb genommen werden, was z.B. durch die Einspeisung von Importdampf geschehen kann. Das siedende Wasser wird dann im Vorfeld und während des Anfahr- und/oder Abfahrvorgangs bevorzugt durch die Verdampfer-Rohrschlangen (20) und/oder durch die Vorverdampfer-Rohrschlangen (18) gefördert. Die Überhitzer-Rohrschlangen (19) des Prozessgaskühlers (3) können mit überhitzdem Dampf oder mit Sattdampf zusätzlich erhitzt werden. Dadurch wird das Prozessgas (z.B. Luft), das während des Anfahr- und/oder des Abfahrvorgangs den Prozessgaskühler (3) durchströmt, ebenfalls erwärmt. Das erwärmte Prozessgas (z.B. Luft) gibt dann seine Wärmeenergie in einem darauffolgenden Wärmetauscher (5) an die Restgasseite ab, wodurch das Restgas auf_der Restgasseite erhitzt wird. Somit wird auch die Wärmemenge, die von dem Prozessgas (z.B. Luft) auf der NO-Gasseite auf die Restgasseite übertragen wird, erhöht.

Ein typischer Economizer (2) weist in der Regel im Innern mindestens eine Gruppe von Rohrschlangen (24) auf, durch welche im stationären Betrieb das zu erhitzende Speisewasser transportiert wird. Dabei handelt es sich im Allgemeinen um Kesselspeisewasser. Das Prozessgas durchströmt im stationären Betrieb das Innere des Economisers (2) und gibt einen Teil seiner thermischen Energie an das Speisewasser in den Rohrschlangen (24) ab. Beim An- und Abfahrbetrieb der Anlage kann durch diese Rohrschlangen (24) anstelle des Speisewassers als Kühlmittel ein Wärmeträgerfluid geleitet werden, was das Prozessgas im Innern des Economisers (2) erwärmt anstatt dieses abzukühlen. Dabei können einzelne, mehrere oder auch alle dieser Rohrschlangen (24) mit dem Wärmeträgerfluid beaufschlagt werden. In einer alternativen Variante kann der Economiser auch mit zusätzlichen Rohrschlangen (25) ausgestattet sein, durch die im An- und Abfahrbetrieb der Anlage ein Heizmedium geleitet wird, wobei durch die übrigen Rohrschlangen (24) ebenfalls ein solches Heizmedium geleitet wird oder die übrigen Rohrschlangen (24) stillgelegt werden bzw. mit dem aus dem stationären Betrieb vorhandenen Medium betrieben werden. Auf jeden Fall erfolgt im An- und/oder Abfahrbetrieb erfindungsgemäß vorzugsweise ein Erhitzen des den Economiser (2) durchströmenden Prozessgases.

Dazu können in einer weiteren bevorzugten Variante des erfindungsgemäßen Verfahrens zusätzliche und/oder bestehende Rohrschlangen (24, 25) im Economiser (2) während des Anfahr- und/oder des Abfahrvorgangs mit heißem zugeführtem Medium, z.B. mit überhitztem oder gesättigtem (externem) Dampf beaufschlagt werden, wodurch die Temperatur des auf der NO-Gasseite befindlichen Prozessgases erhöht wird. Dadurch wird das Prozessgas (z.B. Luft), das während des Anfahr- und/oder des Abfahrvorgangs den Economiser (2) durchströmt, erwärmt. Das erwärmte Prozessgas (z.B. Luft) gibt dann seine Wärmeenergie in einem nachge-schalteten Wärmetauscher (4) an die Restgasseite ab, wodurch das Restgas auf der Restgasseite vorgewärmt wird und besonders bevorzugt in einer nachgeschalteten Stufe mit Wärmeenergie aus dem Prozessgaskühler (3) auf die von der mindestens einen Restgasturbine (11) benötigte Eintrittstemperatur erhitzt wird.

In einer besonders bevorzugten Ausführungsform des erfindungsgemäßen Verfahrens werden zwecks Gewährleistung einer guten Wärmeübertragung neben den zusätzlichen Rohrschlangen (25) die bestehenden Rohrschlangen (24) des Economisers (2) während des Anfahrvorgangs mit Sattdampf und/oder siedendem Wasser aus der Dampftrommel (8) und/oder aus einem externen System erhitzt. Hierzu muss die Dampftrommel (8) und/oder das externe System im Vorfeld des An- und/oder des Abfahrens in Betrieb genommen werden, was z.B. durch die Einspeisung von Importdampf geschehen kann. Das Wasser wird dann im Vorfeld und während des Anfahr- und/oder Abfahrvorgangs durch die Rohrschlangen (24, 25) des Economisers (2) gefördert. Dadurch wird das Prozessgas (z.B. Luft), das während des Anfahrvorgangs den Economiser (2) durchströmt, ebenfalls erwärmt. Das erwärmte Prozessgas (z.B. Luft) gibt dann seine Wärmeenergie in einem darauffolgenden Wärmetauscher (4) an die Restgasseite ab, wodurch das Restgas auf der Restgasseite erhitzt wird. Somit wird auch die Wärmemenge, die von dem Prozessgas (z.B. Luft) auf der NO-Gasseite auf die Restgasseite übertragen wird, erhöht.

Besonders bevorzugt werden sämtliche der Rohrschlangen im Prozessgaskühler (3) und/oder im Speisewasservorwärmer (2) während des Anfahrens und/oder des Abfahrens der Anlage mit einem Heizmedium beaufschlagt.

Weitere bevorzugte Ausführungsformen des erfindungsgemäßen Verfahrens betreffen eine nochmals verbesserte Ausnutzung des Energiegehalts des im Prozessgaskühler (3) bzw. Economiser (2) eingesetzten Wärmeträgerfluids.

Da das Heizmedium, z.B. Wasserdampf, in den Rohrschlangen (18, 19, 20, 21, 24, 25) im Prozessgaskühler (3) bzw. im Economiser (2) nicht seine ganze in ihm enthalten Energie abgibt, wird das Heizmedium aus dem Prozessgaskühler (3) bzw. aus dem Economiser (2) auf der Restgasseite vor dem Eintritt in die mindestens eine Restgasturbine (11) dem Restgas zugegeben oder das Heizmedium wird der Dampftrommel (8) zugegeben; dadurch kann die restliche im Heizmedium vorhandene Energie verwertet werden.

In einer weiteren bevorzugten Variante des erfindungsgemäßen Verfahrens wird auf der Restgasseite vor dem Eintritt in die mindestens eine Restgasturbine (11) ein Wärmetauscher (10) eingebaut, der z.B. mit einem heißen Wärmeträgerfluid, z.B. mit Dampf, betrieben wird, um das Restgas auf der Restgasseite der Salpetersäureanlage auf die erforderliche Eintrittstemperatur für die Restgasturbine (11) während des An- und/oder Abfahrvorgangs zu erhitzen.

Die Betriebsweise der Salpetersäureanlage gemäß der Erfindung erfolgt hauptsächlich in der Anfahr- und/oder Abfahrphase der Anlage, insbesondere in der Anfahrphase. Während des stationären Betriebs sind die Maßnahmen des erfindungsgemäßen Verfahrens nicht erforderlich.

Durch das erfindungsgemäße Verfahren wird Salpetersäure mit einer Konzentration im Bereich von 40 bis 76 % aus Ammoniak und sauerstoffhaltigem Gas nach dem Eindruck- oder Zweidruckverfahren hergestellt, bei dem die Verbrennung des eingesetzten Ammoniaks mittels verdichteter Prozessluft, die in mindestens einem Verdichter verdichtet wurde, geschieht.

Das durch die Verbrennung gebildete Nitrosegas wird mindestens teilweise von Wasser absorbiert, wodurch Salpetersäure entsteht. Das nicht absorbierte Restgas wird zwecks Rückgewinnung von Verdichtungsarbeit in einem oder auch mehreren Restgasturbinen (11), auch Gasexpander genannt, bevorzugt auf Umgebungsdruck, expandiert.

Eine bevorzugte Ausführungsform des erfindungsgemäßen Verfahrens wird in einer Salpetersäureanlage durchgeführt, die einen Absorptionsturm zur Absorption des durch die Verbrennung gebildeten Nitrosegases in Wasser zwecks Bildung von Salpetersäure aufweist sowie eine daran nachgeschaltete Restgasreinigung und ein oder mehrere daran nachgeschaltete Restgasturbinen, wobei während des Anfahr- und/oder des Abfahrvorgangs der Salpetersäureanlage ein Prozessgas den Prozessgaskühler (3) und den Economiser (2) durchströmt und im Prozessgaskühler (3) und/oder im Economiser (2) erwärmt wird, das erwärmte Prozessgas seine Wärmeenergie in einem oder mehreren darauf folgenden Wärmetauschern (5, 4) an die Restgasseite abgibt, wodurch das Restgas auf der Restgasseite zwischen Absorptionsturm und Restgasreinigung erhitzt wird. Diese Maßnahme ermöglicht beim Anfahren eine frühere Inbetriebnahme der Restgasreinigung bzw. beim Abfahren eine verzögerte Außerbe-triebsetzung der Restgasreinigung, wodurch farblos an- und/oder abgefahren werden kann.

Als sauerstoffhaltiges Gas wird häufig Luft eingesetzt, es kann jedoch auch von Vorteil sein, mit Sauerstoff angereicherte Luft einzusetzen.

Die Erfindung betrifft insbesondere ein Verfahren, wobei das Verfahren in einer Anlage durchgeführt wird, die mindestens eine Restgasturbine (11) mit mindestens zwei Stufen umfasst.

Die Erfindung betrifft insbesondere ein Verfahren, das in einer Anlage durchgeführt wird, die mindestens eine Absorptionseinrichtung zur Absorption von Nitrosegas in Wasser umfasst.

Gegenstand der Erfindung ist ferner eine Vorrichtung zur Durchführung eines Verfahrens wie oben beschrieben.

Diese Vorrichtung enthält mindestens einen Luftverdichter (6), mindestens einen Prozessgaskühler (3), mindestens einen Speisewasservorwärmer (2) und mindestens eine Restgasturbine (11), wobei der Prozessgaskühler (3) und/oder der Speisewasservorwärmer (2) neben den für den stationären Betrieb vorgesehenen Rohrschlangen (18, 19, 20, 24) gegebenenfalls noch zusätzliche Rohrschlangen (21, 25) aufweist, wobei mindestens eine der Rohrschlangen (18, 19, 20, 21, 24, 25) mit einer Quelle für ein Heizmedium verbunden ist, so dass mindestens eine der Rohrschlangen (18, 19, 20, 21, 24, 25) während des Anfahrens und/oder des Abfahrens der Vorrichtung mit dem Heizmedium zum Erhitzen des durch den Prozessgaskühler (3) und/oder Speisewasservorwärmer (2) strömenden Prozessgases beaufschlagt werden kann, und wobei dem Prozessgaskühler (3) und/oder dem Speisewasservorwärmer (2) mindestens ein Wärmetauscher (5, 4) nachgeschaltet ist, um Wärmeenergie von dem erhitzten Prozessgas auf das Restgas, das der mindestens einen Restgasturbine (11) zugeführt wird, zu übertragen.

In einer bevorzugten Variante der erfindungsgemäßen Vorrichtung weist der Prozessgaskühler (3) und/oder der Speisewasservorwärmer (2) neben den für den stationären Betrieb vorgesehenen Rohrschlangen (18, 19, 20, 24) noch zusätzliche Rohrschlangen (21, 25) auf, wobei die zusätzlichen Rohrschlangen (21, 25) mit einer Quelle für ein Heizmedium, vorzugsweise mit einer Dampftrommel (8) und/oder einem externen System, verbunden sind, so dass die zusätzlichen Rohrschlangen (21, 25) während des Anfahrens und/oder des Abfahrens der Vorrichtung mit dem Heizmedium zum Erhitzen des durch den Prozessgaskühler (3) und/oder den Speisewasservorwärmer (2) strömenden Prozessgases beaufschlagt werden können.

In einer weiteren bevorzugten Variante der erfindungsgemäßen Vorrichtung weist der Prozessgaskühler (3) und/oder der Speisewasservorwärmer (2) nur die für den stationären Betrieb vorgesehenen Rohrschlangen (18, 19, 20, 24) auf, wobei diese Rohrschlangen (18, 19, 20, 24) mit einer Quelle für ein Heizmedium, vorzugsweise mit einer Dampftrommel (8) und/oder einem externen System, verbunden sind, so dass diese Rohrschlangen (18, 19, 20, 24) während des Anfahrens und/oder des Abfahrens der Vorrichtung mit dem Heizmedium zum Erhitzen des durch den Prozessgaskühler (3) und/oder den Speisewasservorwärmer (2) strömenden Prozessgases beaufschlagt werden können.

In einer weiteren bevorzugten Variante der erfindungsgemäßen Vorrichtung sind sämtliche der für den stationären Betrieb vorgesehenen Rohrschlangen (18, 19, 20, 24) und der gegebenenfalls vorliegenden zusätzlichen Rohrschlangen (21, 25) mit einer Quelle für ein Heizmedium verbunden, so dass diese Rohrschlangen während des Anfahrens und/oder des Abfahrens der Vorrichtung mit einem Heizmedium zum Erhitzen des durch den Prozessgaskühler (3) und/oder Speisewasservorwärmer (2) strömenden Prozessgases beaufschlagt werden können,

In einer weiteren bevorzugten Variante der erfindungsgemäßen Vorrichtung erfolgt die Übertragung der im Wärmetauscher (5, 4) gewonnenen Wärmeenergie auf die Restgasseite zwischen Absorptionsturm und Restgasreinigung der Salpetersäureanlage.

Mit Hilfe des erfindungsgemäßen Verfahrens bzw. der erfindungsgemäßen Vorrichtung lassen sich Anlagen zur Herstellung von Salpetersäure rasch und materialschonend an- und abfahren, ohne dass ein Risiko des Einfrierens der Restgasturbine(n) (11) besteht. Insbesondere beim Einsatz von Restgasturbinen (11) mit hohem Wirkungsgrad bietet das erfindungsgemäße Verfahren ein hohes Ausmaß an Betriebssicherheit, da ein Einfrieren der Restgasturbinen (11) sicher vermieden werden kann. Zusätzlich ermöglicht die Erfindung eine frühere Inbetriebnahme bzw. späteres Außerbetriebsetzen der Restgasreinigung, wodurch farblos angefahren bzw. abgefahren werden kann.
Figur 1 beschreibt das erfindungsgemäße Verfahren schematisch.
Figur 2 beschreibt einen erfindungsgemäß einsetzbaren Prozessgaskühler.
Figur 3 beschreibt einen erfindungsgemäß einsetzbaren Economizer.

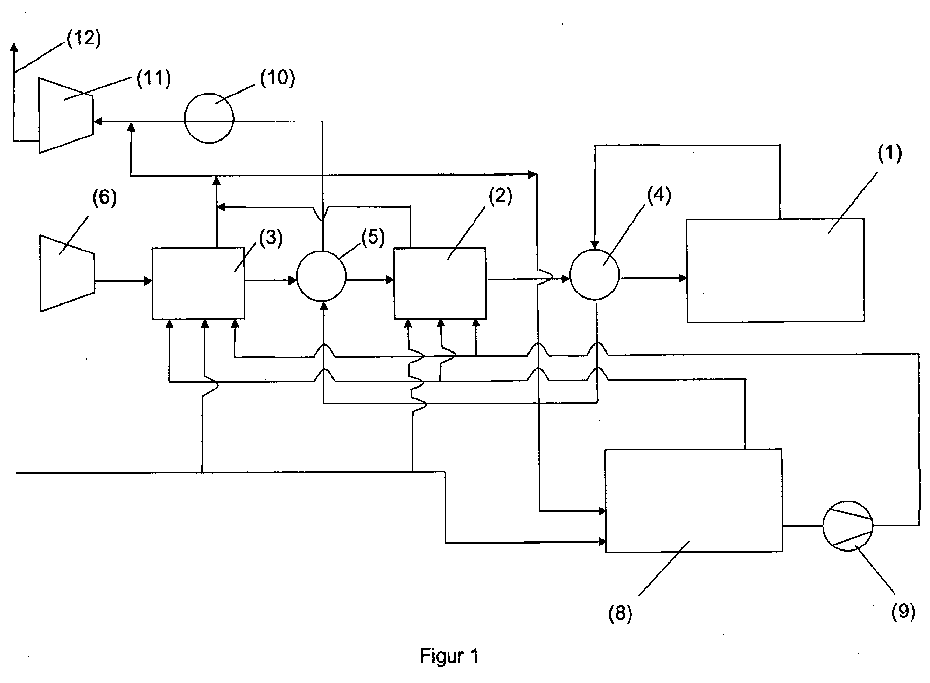

Figur 1 zeigt eine nicht im Detail ausgeführte Salpetersäure-Teilanlage (1), sowie einen Economiser (2), Prozessgaskühler (3), Wärmetauscher (4, 5,10), eine Restgasturbine (11), einen Kamin (12) und eine Dampftrommel (8), Pumpe (9) sowie einen Luftkompressor (6). Luft aus dem Luftkompressor (6) wird beim Anfahren der Anlage über den Prozessgaskühler (3) und den Economiser (2) erwärmt und in die Teilanlage (1) eingeleitet. Der erwärmten Luft wird in den Wärmetauschern (4, 5) Wärmeenergie entzogen und der Restgasseite zugeführt. Eine weitere Erwärmung der Restgasseite kann durch Wärmetauscher (10) erfolgen. Das Wärmeträgerfluid zum Erhitzen der Luft im Prozessgaskühler (3) und im Economiser (2) kann aus der Dampftrommel (8) und/oder aus einem externen System stammen und wird den nicht dargestellten Rohrschlangen durch Pumpe (9) zugeführt. Das abgekühlte Wärmeüberträgerfluid aus dem Prozessgaskühler (3) und dem Economizer (2) wird der Restgasturbine (11) und/oder der Dampftrommel (8) zugeführt. Der Dampftrommel (8) kann außerdem externer Dampf oder ein anderes heißes Fluid zugeführt werden.

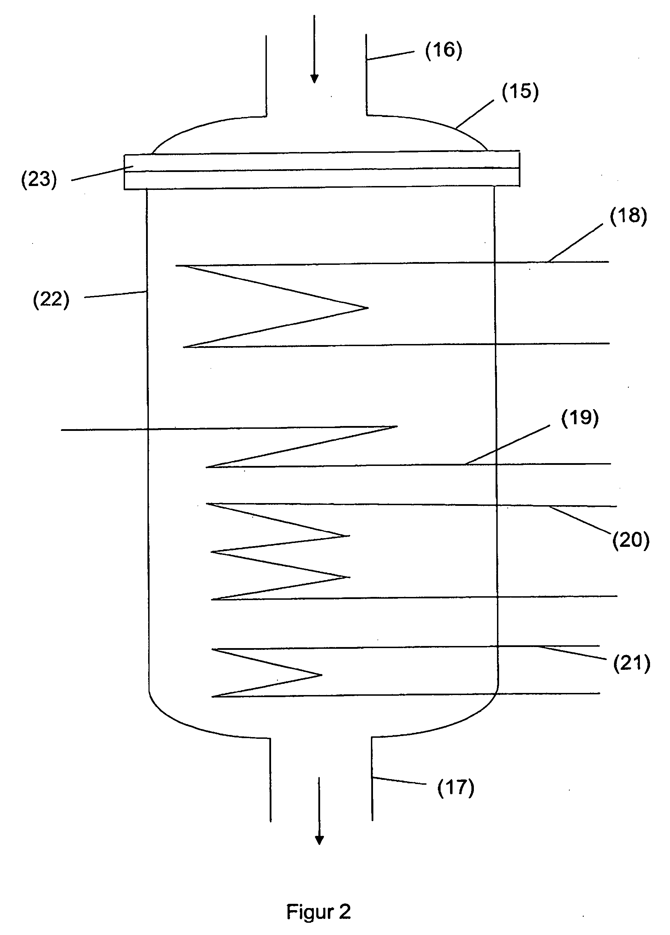

Figur 2 zeigt einen Prozessgaskühler im Längsschnitt. Dargestellt sind der Mantel (22) mit Auslass (17) sowie der Deckel (15) mit Einlass (16) für das durch den Innenraum strömende Prozessgas. Deckel (15) und Mantel (22) sind durch Flansch (23) verbunden. Im Innern des Prozessgaskühlers befinden sich Vorverdampfer-Rohrschlangen (18), Überhitzer-Rohrschlangen (19), Verdampfer-Rohrschlangen (20) und zusätzliche Rohrschlangen (21) zur Vorwärmung. Die zusätzlichen Rohrschlangen (21) werden hauptsächlich während des An- und/oder des Abfahrens der Anlage verwendet und werden mit Heizmedium beaufschlagt. Vorverdampfer-Rohrschlangen (18), Überhitzer-Rohrschlangen (19) und Verdampfer-Rohrschlangen (20) können während des An- und/oder Abfahrens der Anlage mit Heizmedium beaufschlagt werden. Im stationären Betrieb werden diese Rohrschlangen mit Kühlmedium beaufschlagt.

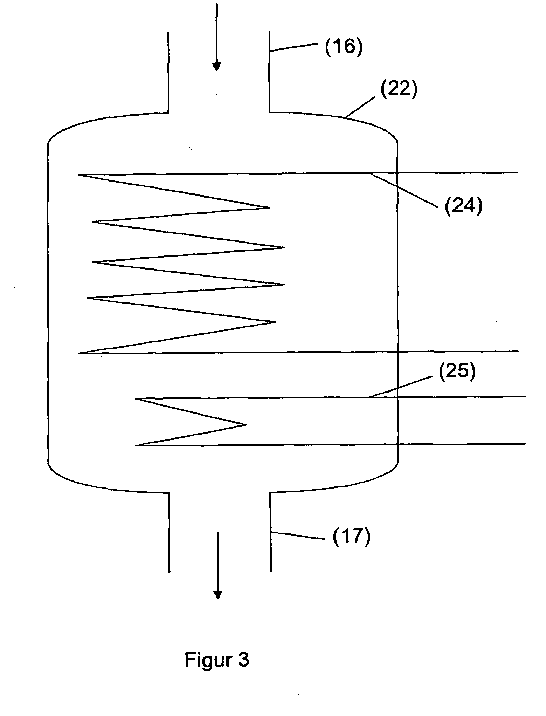

Figur 3 zeigt einen Economizer im Längsschnitt. Dargestellt ist der Mantel (22) mit Ein- und Auslass (16,17) für das strömende Prozessgas. Im Innern des Economizers befinden sich Rohrschlangen (24) für die Erwärmung des durch das Innere strömenden Prozessgases und zusätzliche Rohrschlangen (25) zur weiteren Erwärmung des durch das Innere strömenden Prozessgases. Die zusätzlichen Rohrschlangen (25) werden hauptsächlich während des An- und/oder des Abfahrens der Anlage verwendet und werden mit Heizmedium beaufschlagt. Die Rohrschlangen (24) können während des An- und/oder Abfahrens der Anlage mit Heizmedium beaufschlagt werden. Im stationären Betrieb werden diese Rohrschlangen (24) mit Kesselspeisewasser beaufschlagt, welche durch das durch den Economizer strömende heiße NO-Gas erhitzt wird.

## Patentansprüche

1. Verfahren zum Anfahren und/oder Abfahren einer Anlage zur Herstellung von Salpetersäure aus Ammoniak und sauerstoffhaltigem Gas nach dem Eindruck- oder Zweidruckverfahren, bei dem die Oxidation des eingesetzten Ammoniaks mittels verdichteter Prozessluft an einem Katalysator geschieht, die in mindestens einem Verdichter (6) verdichtet wurde, das durch die Verbrennung gebildete Nitrosegas in ein oder mehreren mit Rohrschlangen für ein Kühlmedium ausgestatteten Prozessgaskühlern (3) sowie in ein oder mehreren mit Rohrschlangen für ein Kühlmedium ausgestatteten Speisewasservorwärmern (2) gekühlt wird und daran anschließend das gekühlte Nitrosegas mindestens teilweise von Wasser absorbiert wird, wodurch Salpetersäure entsteht, und das nicht absorbierte Restgas zwecks Gewinnung von Verdichterarbeit in mindestens eine Restgasturbine (11) expandiert wird, **dadurch gekennzeichnet, dass** während des Anfahrens und/oder des Abfahrens der Salpetersäureanlage der Prozessgaskühler (3) und der Speisewasservorwärmer (2) von einem Prozessgas durchströmt werden, welches im Prozessgaskühler (3) und/oder im Speisewasservorwärmer (2) erhitzt wird, indem mindestens eine der Rohrschlangen im Prozessgaskühler (3) und/oder im Speisewasservorwärmer (2) mit einem Heizmedium beaufschlagt wird, und das erhitzte Prozessgas durch mindestens einen dem Prozessgaskühler (3) und/oder dem Speisewasservorwärmer (2) nachgeschalteten Wärmetauscher (5, 4) geführt wird, um Wärmeenergie von dem erhitzten Prozessgas auf das Restgas, das der mindestens einen Restgasturbine (11) zugeführt wird, zu übertragen.

2. Verfahren nach Anspruch 1, **dadurch gekennzeichnet, dass** Rohrschlangen (18, 19, 20, 21) im Prozessgaskühler (3) während des Anfahrvorgangs mit heißem von außen zugeführtem Heizmedium beaufschlagt werden, wodurch die Temperatur des auf der NO-Gasseite befindlichen durch den/die Prozessgaskühler (3) strömenden Prozessgases erhöht wird, und das erhitzte Prozessgas dann seine Wärmeenergie in einem nachgeschalteten Wärmetauscher (5) an die Restgasseite abgibt, wodurch das Restgas auf der Restgasseite, auf die von der Restgasturbine (11) benötigte Eintrittstemperatur erhitzt wird.

3. Verfahren nach Anspruch 2, **dadurch gekennzeichnet, dass** das heiße von außen zugeführte Heizmedium überhitzter oder gesättigter Dampf ist.

4. Verfahren nach Anspruch 2, **dadurch gekennzeichnet, dass** ein Prozessgaskühler (3) eingesetzt wird, der neben den für den stationären Betrieb vorgesehenen Vorverdampfer-, Überhitzer- und/oder Verdampfer-Rohrschlangen (18, 19, 20) noch zusätzliche Rohrschlangen (21) aufweist, wobei neben den zusätzlichen Rohrschlangen (21) die Vorverdampfer-, Überhitzer- und/oder Verdampfer-Rohrschlangen (18, 19, 20) des Prozessgaskühlers (3) während des Anfahr- und/oder Abfahrvorgangs mit Sattdampf und/oder mit siedendem Wasser aus einer Dampftrommel (8) und/oder aus einem externen System erhitzt werden, wobei das siedende Wasser vor und während des Anfahr- und/oder Abfahrvorgangs der Salpetersäureanlage bevorzugt durch die Verdampfer-Rohrschlangen (20) und/oder Vorverdampfer-Rohrschlangen (18) gefördert wird und die Überhitzer-Rohrschlangen (19) des Prozessgaskühlers (3) zusätzlich mit überhitzdem Dampf oder mit Sattdampf erhitzt werden.

5. Verfahren nach Anspruch 2, **dadurch gekennzeichnet, dass** ein Prozessgaskühler (3) eingesetzt wird, der nur die für den stationären Betrieb vorgesehenen Vorverdampfer-, Überhitzer- und/oder Verdampfer-Rohrschlangen (18, 19, 20) aufweist, die während des Anfahr- und/oder Abfahrvorgangs mit Sattdampf und/oder mit siedendem Wasser aus einer Dampftrommel (8) und/oder aus einem externem System erhitzt werden, wobei das siedende Wasser vor und während des Anfahr- und/oder Abfahrvorgangs der Salpetersäureanlage durch die Verdampfer-Rohrschlangen (20) und/oder Vorverdampfer-Rohrschlangen (18) gefördert wird und die Überhitzer-Rohrschlangen (19) des Prozessgaskühlers (3) zusätzlich mit überhitzdem Dampf oder Sattdampf erhitzt werden.

6. Verfahren nach einem der Ansprüche 1 bis 5, **dadurch gekennzeichnet, dass** ein Speisewasservorwärmer (2) eingesetzt wird, der neben den für den stationären Betrieb vorgesehenen Rohrschlangen (24) noch zusätzliche Rohrschlangen (25) aufweist, wobei die zusätzlichen und/oder für den stationären Betrieb vorgesehenen Rohrschlangen (24, 25) im Speisewasservorwärmer (2) während des Anfahr- und/oder Abfahrvorgangs mit heißem zugeführtem Heizmedium beaufschlagt werden, wodurch die Temperatur des auf der NO-Gasseite befindlichen Prozessgases erhöht wird, und das erwärmte Prozessgas seine Wärmeenergie in einem nachgeschalteten Wärmetauscher (4) an die Restgasseite abgibt, wodurch das Restgas auf der Restgasseite vorgewärmt wird.

7. Verfahren nach Anspruch 6, **dadurch gekennzeichnet, dass** das auf der Restgasseite vorgewärmte Restgas in einer nachgeschalteten Stufe mit Wärmeenergie aus dem Prozessgaskühler (3) auf die von der Restgasturbine (11) benötigte Eintrittstemperatur erhitzt wird.

8. Verfahren nach einem der Ansprüche 1 bis 5, **dadurch gekennzeichnet, dass** ein Speisewasservorwärmer (2) eingesetzt wird, der nur die für den stationären Betrieb vorgesehenen Rohrschlangen (24) aufweist, wobei die für den stationären Betrieb vorgesehenen Rohrschlangen (24) im Speisewasservorwärmer (2) während des Anfahr- und/oder Abfahrvorgangs mit heißem zugeführtem Heizmedium, vorzugsweise mit überhitztem oder gesättigtem Dampf, beaufschlagt werden, wodurch die Temperatur des auf der NO-Gasseite befindlichen Prozessgases erhöht wird, und das erwärmte Prozessgas seine Wärme-energie in einem nachgeschalteten Wärmetauscher (4) an die Restgasseite abgibt, wodurch das Restgas auf der Restgasseite vorgewärmt wird.

9. Verfahren nach Anspruch 8, **dadurch gekennzeichnet, dass** das auf der Restgasseite vorgewärmte Restgas in einer nachgeschalteten Stufe mit Wärmeenergie aus dem Prozessgaskühler (3) auf die von der Restgasturbine (11) benötigte Eintrittstemperatur erhitzt wird

10. Verfahren nach Anspruch 6, **dadurch gekennzeichnet, dass** neben den zusätzlichen Rohrschlangen (25) die für den stationären Betrieb vorgesehenen Rohrschlangen (24) des Speisewasservorwärmers (2) während des Anfahrvorgangs mit Sattdampf und/oder mit siedendem Wasser aus einer Dampftrommel (8) und/oder aus einem externen System erhitzt werden, wodurch das Prozessgas, das während des Anfahrvorgangs den Speisewasservorwärmer (2) durchströmt, erwärmt wird, und dann seine Wärmeenergie in einem nachgeschalteten Wärmetauscher (4) an die Restgasseite abgibt, wodurch das Restgas auf der Restgasseite erhitzt wird.

11. Verfahren nach einem der Ansprüche 1 bis 7, **dadurch gekennzeichnet, dass** das durch die Rohrschlangen des Prozessgaskühlers (3) und/oder des Speisewasservorwärmers (2) geströmte Heizmedium dem Restgas auf der Restgasseite vor dem Eintritt in die mindestens eine Restgasturbine (11) zugegeben wird oder dass das durch die Rohrschlangen des Prozessgaskühlers (3) und/oder des Speisewasservorwärmers (2) geströmte Heizmedium der Dampftrommel (8) zugegeben wird.

12. Verfahren nach einem der Ansprüche 1 bis 11, **dadurch gekennzeichnet, dass** auf der Restgasseite vor dem Eintritt in die mindestens eine Restgasturbine (11) ein Wärmetauscher (10) eingebaut ist, der mit einem heißen Wärmeträgerfluid betrieben wird, um zumindest während des An- und Abfahrvorgangs das Restgas auf der Restgasseite der Salpetersäureanlage auf die erforderliche Eintrittstemperatur für die Restgasturbine (11) zu erhitzen.

13. Verfahren nach einem der Ansprüche 1 bis 12, **dadurch gekennzeichnet, dass** das Verfahren in einer Anlage durchgeführt wird, die mindestens eine Absorptionseinrichtung zur Absorption von Nitrosegas in Wasser umfasst.

14. Verfahren nach einem der Ansprüche 1 bis 13, **dadurch gekennzeichnet, dass** dieses in einer Salpetersäureanlage durchgeführt wird, die einen Absorptionsturm zur Absorption des durch die Verbrennung gebildeten Nitrosegases in Wasser zwecks Bildung von Salpetersäure aufweist sowie eine daran nachgeschaltete Restgasreinigung und ein oder mehrere daran nachgeschaltete Restgasturbinen, wobei während des Anfahr- und/oder des Abfahrvorgangs der Salpetersäure-anlage ein Prozessgas den Prozessgaskühler (3) und den Economiser (2) durchströmt und im Prozessgaskühler (3) und/oder im Economiser (2) erwärmt wird, das erwärmte Prozessgas seine Wärmeenergie in einem oder mehreren darauf folgenden Wärmetauschern (5, 4) an die Restgasseite abgibt, wodurch das Restgas auf der Restgasseite zwischen Absorptionsturm und Restgasreinigung erhitzt wird.

15. Vorrichtung zur Durchführung des Verfahrens nach Anspruch 1 enthaltend mindestens einen Luftverdichter (6), mindestens einen Prozessgaskühler (3), mindestens einen Speisewasservorwärmer (2) und mindestens eine Restgasturbine (11), wobei der Prozessgaskühler (3) und der Speisewasservorwärmer (2) Rohrschlangen (18, 19, 20, 24) aufweist, wobei mindestens eine der Rohrschlangen mit einer Quelle für ein Heizmedium verbunden ist, so dass die mindestens eine Rohrschlange in dem Prozessgaskühler (3) und/oder in dem Speisewasservorwärmer (2) während des Anfahrens und/oder des Abfahrens der Vorrichtung mit dem Heizmedium zum Erhitzen des durch den Prozessgaskühler (3) und Speisewasservorwärmer (2) strömenden Prozessgases beaufschlagt werden kann, und wobei dem Prozessgaskühler (3) und/oder dem Speisewasservorwärmer (2) mindestens ein Wärmetauscher (5, 4) nachgeschaltet ist, um Wärmeenergie von dem erhitzten Prozessgas auf das Restgas, das der Restgasturbine (11) zugeführt wird, zu übertragen.

16. Vorrichtung nach Anspruch 15, **dadurch gekennzeichnet, dass** der Prozessgaskühler (3) und/oder der Speisewasservorwärmer (2) neben den für den stationären Betrieb vorgesehenen Rohrschlangen (18, 19, 20, 24) noch zusätzliche Rohrschlangen (21, 25) aufweist, wobei die zusätzlichen Rohrschlangen (21, 25) mit einer Quelle für ein Heizmedium verbunden sind, so dass die zusätzlichen Rohrschlangen (21, 25) während des Anfahrens und/oder des Abfahrens der Vorrichtung mit dem Heizmedium zum Erhitzen des durch den Prozessgaskühler (3) und/oder den Speisewasservorwärmer (2) strömenden Prozessgases beaufschlagt werden können.

17. Vorrichtung nach Anspruch 16, **dadurch gekennzeichnet, dass** die Quelle für ein Heizmedium eine Dampftrommel (8) und/oder ein externes System ist.

18. Vorrichtung nach einem der Ansprüche 15 bis 17, **dadurch gekennzeichnet, dass** der Prozessgaskühler (3) und/oder der Speisewasservorwärmer (2) nur die für den stationären Betrieb vorgesehenen Rohrschlangen (18, 19, 20, 24) aufweist, wobei diese Rohrschlangen mit einer Quelle für ein Heizmedium verbunden sind, so dass diese Rohrschlangen während des Anfahrens und/oder des Abfahrens der Vorrichtung mit dem Heizmedium zum Erhitzen des durch den Prozessgaskühler (3) und/oder den Speisewasservorwärmer (2) strömenden Prozessgases beaufschlagt werden können.

19. Vorrichtung nach einem der Ansprüche 15 bis 18, **dadurch gekennzeichnet, dass** die Übertragung der im Wärmetauscher (5, 4) gewonnenen Wärmeenergie auf die Restgasseite zwischen Absorptionsturm und Restgasreinigung der Salpetersäureanlage erfolgt.

20. Vorrichtung nach einem der Ansprüche 15 bis 19, **dadurch gekennzeichnet, dass** diese mindestens eine Restgasturbine (11) mit mindestens zwei Stufen umfasst.

## Claims

1. A process for startup and/or shutdown of a plant for preparation of nitric acid from ammonia and oxygenous gas by the single pressure or dual pressure process, in which the ammonia used is oxidized by means of compressed process air over a catalyst, said process air having been compressed in at least one compressor (6), the nitrous gas formed by the combustion is cooled in one or more process gas coolers (3) equipped with pipe coils for a cooling medium and in one or more feed water preheaters (2) equipped with pipe coils for a cooling medium, and the cooled nitrous gas is subsequently absorbed at least partly by water, forming nitric acid, and the unabsorbed residual gas is expanded in at least one residual gas turbine (11) for the purpose of recovering compressor work, wherein a process gas flowing through the process gas cooler (3) and the feed water preheater (2) during the startup and/or shutdown of the nitric acid plant is heated in the process gas cooler (3) and/or in the feed water preheater (2) by charging at least one of the pipe coils in the process gas cooler (3) and/or in the feed water preheater (2) with a heating medium, and the heated process gas is guided through at least one heat exchanger (5, 4) connected downstream of the process gas cooler (3) and/or the feed water preheater (2), in order to transfer thermal energy from the heated process gas to the residual gas which is supplied to the at least one residual gas turbine (11).

2. The process as claimed in claim 1, wherein pipe coils (18, 19, 20, 21) in the process gas cooler (3) are charged during the startup operation with hot heating medium supplied from the outside, as a result of which the temperature of the process gas flowing through the process gas cooler(s) (3) present on the NO gas side is increased, and the heated process gas then releases its thermal energy to the residual gas side in a downstream heat exchanger (5), as a result of which the residual gas on the residual gas side is heated to the inlet temperature required by the residual gas turbine (11).

3. The process as claimed in claim 2, wherein the hot heating medium supplied from the outside is superheated or saturated steam.

4. The process as claimed in claim 2, wherein a process gas cooler (3) is used which, as well as the pre-evaporator, superheater and/or evaporator pipe coils (18, 19, 20) provided for steady-state operation, also has additional pipe coils (21), and not only the additional pipe coils (21) but also the pre-evaporator, superheater and/or evaporator pipe coils (18, 19, 20) of the process gas cooler (3) are heated during the startup and/or shutdown operation with saturated steam and/or with boiling water from a steam drum (8) and/or from an external system, and the boiling water, prior to and during the startup and/or shutdown operation of the nitric acid plant, is preferably conveyed through their evaporator pipe coils (20) and/or pre-evaporator pipe coils (18), and the superheater pipe coils (19) of the process gas cooler (3) are additionally heated with superheated steam or with saturated steam.

5. The process as claimed in claim 2, wherein a process gas cooler (3) is used which has only the pre-evaporator, superheater and/or evaporator pipe coils (18, 19, 20) which are provided for steady-state operation and are heated during the startup and/or shutdown operation with saturated steam and/or with boiling water from a steam drum (8) and/or from an external system, and the boiling water, prior to and during the startup and/or shutdown operation of the nitric acid plant, is conveyed through the evaporator pipe coils (20) and/or pre-evaporator pipe coils (18), and the superheater pipe coils (19) of the process gas cooler (3) are additionally heated with superheated steam or saturated steam.

6. The process as claimed in any of claims 1 to 5, wherein a feed water preheater (2) is used which, as well as the pipe coils (24) provided for steady-state operation, also has additional pipe coils (25), and the additional pipe coils and/or those provided for steady-state operation (24, 25) in the feed water preheater (2) are charged during the startup and/or shutdown operation with heating medium supplied hot, as a result of which the temperature of the process gas present on the NO gas side is increased, and the heated process gas releases its thermal energy to the residual gas side in a downstream heat exchanger (4), as a result of which the residual gas on the residual gas side is preheated.

7. The process as claimed in claim 6, wherein the residual gas preheated on the residual gas side is heated to the inlet temperature required by the residual gas turbine (11) with thermal energy from the process gas cooler (3) in a downstream stage.

8. The process as claimed in any of claims 1 to 5, wherein a feed water preheater (2) is used which has only the pipe coils (24) provided for steady-state operation, and the pipe coils (24) provided for steady-state operation in the feed water preheater (2) are charged during the startup and shutdown operation with heating medium supplied hot, preferably with superheated or saturated steam, as a result of which the temperature of the process gas present on the NO gas side is increased, and the heated process gas releases its thermal energy to the residual gas side in a downstream heat exchanger (4), as a result of which the residual gas on the residual gas side is preheated.

9. The process as claimed in claim 8, wherein the residual gas preheated on the residual gas side is heated to the inlet temperature required by the residual gas turbine (11) with thermal energy from the process gas cooler (3) in a downstream stage.

10. The process as claimed in claim 6, wherein, as well as the additional pipe coils (25), the pipe coils (24) of the feed water preheater (2) which are provided for steady-state operation are heated during the startup operation with saturated steam and/or with boiling water from a steam drum (8) and/or from an external system, as a result of which the process gas which flows through the feed water preheater (2) during the startup operation is heated, and then releases its thermal energy to the residual gas side in a downstream heat exchanger (4), as a result of which the residual gas on the residual gas side is heated.

11. The process as claimed in any of claims 1 to 7, wherein the heating medium passed through the pipe coils of the process gas cooler (3) and/or of the feed water preheater (2) is added to the residual gas on the residual gas side prior to entry into the at least one residual gas turbine (11), or the heating medium passed through the pipe coils of the process gas cooler (3) and/or of the feed water preheater (2) is added to the steam drum (8).

12. The process as claimed in any of claims 1 to 11, wherein a heat exchanger (10) installed on the residual gas side upstream of entry into the at least one residual gas turbine (11) is operated with a hot heat carrier fluid in order to heat the residual gas on the residual gas side of the nitric acid plant, at least during the startup and shutdown operation, to the required inlet temperature for the residual gas turbine (11).

13. The process as claimed in any of claims 1 to 12, which is performed in a plant comprising at least one absorption unit for absorption of nitrous gas in water.

14. The process as claimed in any of claims 1 to 13, which is performed in a nitric acid plant which has an absorption tower for absorption of the nitrous gas formed by the combustion in water for the purpose of formation of nitric acid, and a downstream residual gas purification and one or more downstream residual gas turbines, and, during the startup and/or shutdown operation of the nitric acid plant, a process gas flows through the process gas cooler (3) and the economizer (2) and is heated in the process gas cooler (3) and/or in the economizer (2), the heated process gas releases its thermal energy to the residual gas side in one or more downstream heat exchangers (5, 4), as a result of which the residual gas on the residual gas side is heated between absorption tower and residual gas purification.

15. An apparatus for performing the process as claimed in claim 1, comprising at least one air compressor (6), at least one process gas cooler (3), at least one feed water preheater (2) and at least one residual gas turbine (11), the process gas cooler (3) and the feed water preheater (2) comprising pipe coils (18, 19, 20, 24), at least one of the pipe coils being connected to a source for a heating medium, such that the at least one pipe coil in the process gas cooler (3) and/or in the feed water preheater (2) can be charged during the startup and/or shutdown of the apparatus with the heating medium for heating the process gas flowing through the process gas cooler (3) and feed water preheater (2), and at least one heat exchanger (5, 4) being connected downstream of the process gas cooler (3) and/or the feed water preheater (2) in order to transfer thermal energy from the heated process gas to the residual gas which is supplied to the residual gas turbine (11).

16. The apparatus as claimed in claim 15, wherein the process gas cooler (3) and/or the feed water preheater (2), as well as the pipe coils (18, 19, 20, 24) provided for steady-state operation, also has additional pipe coils (21, 25), and the additional pipe coils (21, 25) are connected to a source for a heating medium, such that the additional pipe coils (21, 25) can be charged during the startup and/or shutdown of the apparatus with the heating medium for heating of the process gas flowing through the process gas cooler (3) and/or the feed water preheater (2).

17. The apparatus as claimed in claim 16, wherein the source for a heating medium is a steam drum (8) and/or an external system.

18. The apparatus as claimed in any of claims 15 to 17, wherein the process gas cooler (3) and/or the feed water preheater (2) has only the pipe coils (18, 19, 20, 24) provided for steady-state operation, and these pipe coils are connected to a source for a heating medium, such that these pipe coils can be charged during the startup and/or shutdown of the apparatus with the heating medium for heating the process gas flowing through the process gas cooler (3) and/or the feed water preheater (2).

19. The apparatus as claimed in any of claims 15 to 18, wherein the thermal energy obtained in the heat exchanger (5, 4) is transferred to the residual gas side between absorption tower and residual gas purification of the nitric acid plant.

20. The apparatus as claimed in any of claims 15 to 19, which comprises at least one residual gas turbine (11) having at least two stages.

## Revendications

1. Procédé pour démarrer et/ou évacuer une installation de préparation d'acide nitrique à partir d'ammoniac et de gaz contenant de l'oxygène selon le procédé à une ou à double pression, dans lequel l'oxydation de l'ammoniac utilisé est réalisée sur un catalyseur au moyen d'air de procédé comprimé, qui a été comprimé dans au moins un compresseur (6), qui est refroidi par la combustion des vapeurs nitreuses formées dans un ou plusieurs refroidisseur(s) (3) de gaz de procédé équipé(s) de serpentins pour un agent de refroidissement ainsi que dans un ou plusieurs dispositif(s) de préchauffage (2) d'eau injectée équipé(s) de serpentins pour un agent de refroidissement et les vapeurs nitreuses refroidies sont ensuite absorbées au moins partiellement par de l'eau, suite à quoi de l' acide nitrique se forme et le gaz résiduel non absorbé est expansé dans au moins une turbine (11) de gaz résiduel en vue de la production de travail de compression, **caractérisé en ce que** pendant le démarrage et/ou l'évacuation de l'installation d'acide nitrique, le refroidisseur (3) de gaz de procédé et le dispositif de préchauffage (2) d'eau injectée sont traversés par un gaz de procédé, qui est chauffé dans le refroidisseur (3) de gaz de procédé et/ou dans le dispositif de préchauffage (2) d'eau injectée **en ce qu'**au moins un des serpentins dans le refroidisseur (3) de gaz de procédé et/ou dans le dispositif de préchauffage (2) d'eau injecté est alimenté en fluide caloporteur et le gaz de procédé chauffé est guidé à travers ledit au moins un échangeur thermique (5, 4) disposé en aval du refroidisseur (3) de gaz de procédé et/ou du dispositif de préchauffage (2) d'eau injectée pour transférer de l'énergie thermique du gaz de procédé chauffé au gaz résiduel qui est introduit dans ladite au moins une turbine (11) de gaz résiduel.

2. Procédé selon la revendication 1, **caractérisé en ce que** les serpentins (18, 19, 20, 21) dans le refroidisseur (3) de gaz de procédé sont alimentés, pendant le processus de démarrage, en fluide caloporteur chaud introduit à partir de l'extérieur, suite à quoi la température du gaz de procédé se trouvant côté NO gazeux, s'écoulant à travers le(s) refroidisseur(s) (3) de gaz de procédé est augmentée et le gaz de procédé chauffé transmet alors son énergie thermique dans un échangeur thermique (5) disposé en aval au côté gaz résiduel, suite à quoi le gaz résiduel du côté gaz résiduel est chauffé à la température d'entrée nécessaire pour la turbine (11) de gaz résiduel.

3. Procédé selon la revendication 2, **caractérisé en ce que** le fluide caloporteur chaud introduit à partir de l'extérieur est de la vapeur surchauffée ou saturée.

4. Procédé selon la revendication 2, **caractérisé en ce qu'**on utilise un refroidisseur (3) de gaz de procédé qui présente, outre les serpentins (18, 19, 20) du pré-évaporateur, du surchauffeur et/ou de l'évaporateur, prévus pour le fonctionnement stationnaire, encore des serpentins (21) supplémentaires, les serpentins (18, 19, 20) du pré-évaporateur, du surchauffeur et/ou de l'évaporateur du refroidisseur (3) de gaz de procédé, en plus des serpentins (21) supplémentaires, étant chauffés pendant le processus de démarrage et/ou d'évacuation par de la vapeur saturée et/ou par de l'eau à ébullition provenant d'un tambour à vapeur (8) et/ou provenant d'un système externe, l'eau à ébullition étant transportée, avant et pendant le processus de démarrage et/ou d'évacuation de l'installation d'acide nitrique, de préférence à travers les serpentins (20) de l'évaporateur et/ou les serpentins (18) du pré-évaporateur et les serpentins (19) du surchauffeur du refroidisseur (3) de gaz de procédé étant en outre chauffés par de la vapeur surchauffée ou de la vapeur saturée.

5. Procédé selon la revendication 2, **caractérisé en ce qu'**on utilise un refroidisseur (3) de gaz de procédé qui ne présente que les serpentins (18, 19, 20) du pré-évaporateur, du surchauffeur et/ou de l'évaporateur prévus pour le fonctionnement stationnaire, qui sont chauffés pendant le processus de démarrage et/ou d'évacuation par de la vapeur saturée et/ou par de l'eau à ébullition provenant d'un tambour à vapeur (8) et/ou provenant d'un système externe, l'eau à ébullition étant transportée, avant et pendant le processus de démarrage et/ou d'évacuation de l'installation d'acide nitrique, à travers les serpentins (20) de l'évaporateur et/ou les serpentins (18) du pré-évaporateur et les serpentins (19) du surchauffeur du refroidisseur (3) de gaz de procédé étant en outre chauffés par de la vapeur surchauffée ou de la vapeur saturée.

6. Procédé selon l'une quelconque des revendications 1 à 5, **caractérisé en ce qu'**on utilise un dispositif de préchauffage (2) d'eau injectée qui présente, outre les serpentins (24) prévus pour le fonctionnement stationnaire, encore des serpentins (25) supplémentaires, les serpentins (24, 25) supplémentaires et/ou prévus pour le fonctionnement stationnaire dans le dispositif de préchauffage (2) d'eau injectée étant alimentés pendant le processus de démarrage et/ou d'évacuation en fluide caloporteur chaud injecté, la température du gaz de procédé se trouvant côté NO gazeux étant augmentée et le gaz de procédé réchauffé transmettant son énergie thermique dans un échangeur thermique (4) disposé en aval au côté gaz résiduel, suite à quoi le gaz résiduel du côté gaz résiduel est préchauffé.

7. Procédé selon la revendication 6, **caractérisé en ce que** le gaz résiduel préchauffé du côté gaz résiduel est chauffé dans une étape disposée en aval par de l'énergie thermique provenant du refroidisseur (3) de gaz de procédé à la température d'entrée nécessaire de la turbine (11) de gaz résiduel.

8. Procédé selon l'une quelconque des revendications 1 à 5, **caractérisé en ce qu'**on utilise un dispositif de préchauffage (2) d'eau injectée qui présente uniquement les serpentins (24) prévus pour le fonctionnement stationnaire, les serpentins (24) prévus pour le fonctionnement stationnaire dans le dispositif de préchauffage (2) d'eau injectée étant alimentés pendant le processus de démarrage et/ou d'évacuation en fluide caloporteur chaud injecté, de préférence en vapeur surchauffée ou saturée, suite à quoi la température du gaz de procédé se trouvant côté NO gazeux est augmentée et le gaz de procédé réchauffé transmet son énergie thermique dans un échangeur thermique (4) disposé en aval au côté gaz résiduel, suite à quoi le gaz résiduel du côté gaz résiduel est préchauffé.

9. Procédé selon la revendication 8, **caractérisé en ce que** le gaz résiduel préchauffé du côté gaz résiduel est chauffé dans une étape disposée en aval par de l'énergie thermique provenant du refroidisseur (3) de gaz de procédé à la température d'entrée nécessaire de la turbine (11) de gaz résiduel.

10. Procédé selon la revendication 6, **caractérisé en ce que** les serpentins (24) prévus pour le fonctionnement stationnaire, en plus des serpentins (25) supplémentaires, du dispositif de préchauffage (2) d'eau injectée sont chauffés pendant le processus de démarrage par de la vapeur saturée et/ou par de l'eau à ébullition provenant d'un tambour à vapeur (8) et/ou d'un système externe, suite à quoi le gaz de procédé, qui s'écoule pendant le processus de démarrage à travers le dispositif de préchauffage (2) d'eau injectée, est réchauffé et transmet ensuite son énergie thermique dans un échangeur thermique (4) disposé en aval au côté gaz résiduel, suite à quoi le gaz résiduel du côté gaz résiduel est chauffé.

11. Procédé selon l'une quelconque des revendications 1 à 7, **caractérisé en ce que** le fluide caloporteur s'écoulant à travers les serpentins du refroidisseur (3) de gaz de procédé et/ou du dispositif de préchauffage (2) d'eau injectée est ajouté au gaz résiduel du côté gaz résiduel, avant l'entrée dans ladite au moins une turbine (11) de gaz résiduel ou **en ce que** le fluide caloporteur s'écoulant à travers les serpentins du refroidisseur (3) de gaz de procédé et/ou du dispositif de préchauffage (2) d'eau injectée est introduit dans le tambour à vapeur (8).

12. Procédé selon l'une quelconque des revendications 1 à 11, **caractérisé en ce qu'**un échangeur thermique (10) est monté du côté gaz résiduel, avant l'entrée dans ladite au moins une turbine (11) de gaz résiduel, et exploité avec un fluide caloporteur chaud pour chauffer, au moins pendant le processus de démarrage et d'évacuation, le gaz résiduel du côté gaz résiduel de l'installation d'acide nitrique à la température d'entrée nécessaire pour la turbine (11) de gaz résiduel.

13. Procédé selon l'une quelconque des revendications 1 à 12, **caractérisé en ce que** le procédé est réalisé dans une installation qui comprend au moins un dispositif d'absorption pour l'absorption de vapeurs nitreuses dans de l'eau.

14. Procédé selon l'une quelconque des revendications 1 à 13, **caractérisé en ce qu'**il est réalisé dans une installation d'acide nitrique, qui présente une tour d'absorption pour l'absorption des vapeurs nitreuses formées par la combustion dans de l'eau en vue de la formation d'acide nitrique ainsi qu'une purification de gaz résiduel disposée en aval et une ou plusieurs turbine(s) de gaz résiduel disposée(s) en aval, un gaz de procédé s'écoulant, pendant le processus de démarrage et/ou d'évacuation de l'installation d'acide nitrique, à travers le refroidisseur (3) de gaz de procédé et l'économiseur (2) et étant réchauffé dans le refroidisseur (3) de gaz de procédé et/ou dans l'économiseur (2), le gaz de procédé préchauffé transmettant son énergie thermique dans un ou plusieurs échangeur(s) thermique(s) (5, 4) consécutif(s) à celui/ceux-ci au côté gaz résiduel, suite à quoi le gaz résiduel du côté gaz résiduel est chauffé entre la tour d'absorption et la purification de gaz résiduel.

15. Dispositif pour la réalisation du procédé selon la revendication 1, contenant au moins un compresseur à air (6), au moins un refroidisseur (3) de gaz de procédé, au moins un dispositif de préchauffage (2) d'eau injectée et au moins une turbine (11) de gaz résiduel, le refroidisseur (3) de gaz de procédé et le dispositif de préchauffage (2) d'eau injectée présentant des serpentins (18, 19, 20, 24), au moins un des serpentins étant relié à une source de fluide caloporteur, de telle sorte que ledit au moins un serpentin dans le refroidisseur (3) de gaz de procédé et/ou dans le dispositif de préchauffage (2) d'eau injectée peut être alimenté en fluide caloporteur pendant le démarrage et/ou l'évacuation de l'installation pour chauffer le gaz de procédé s'écoulant à travers le refroidisseur (3) de gaz de procédé et le dispositif de préchauffage (2) d'eau injectée et le refroidisseur (3) de gaz de procédé et/ou le dispositif de préchauffage (2) d'eau injectée étant suivi(s) d'au moins un échangeur thermique (5, 4) pour transmettre l'énergie thermique du gaz de procédé chauffé au gaz résiduel qui est introduit dans la turbine (11) de gaz résiduel.

16. Dispositif selon la revendication 15, **caractérisé en ce que** le refroidisseur (3) de gaz de procédé et/ou le dispositif de préchauffage (2) d'eau injectée présente(nt), outre les serpentins (18, 19, 20, 24) prévus pour le fonctionnement stationnaire, encore des serpentins supplémentaires (21, 25), les serpentins supplémentaires (21, 25) étant reliés à une source de fluide caloporteur de telle sorte que les serpentins supplémentaires (21, 25) peuvent être alimentés en fluide caloporteur pendant le démarrage et/ou l'évacuation de l'installation pour chauffer le gaz de procédé s'écoulant à travers le refroidisseur (3) de gaz de procédé et/ou le dispositif de préchauffage (2) d'eau injectée.

17. Dispositif selon la revendication 16, **caractérisé en ce que** la source de fluide caloporteur est un tambour à vapeur (8) et/ou un système externe.

18. Dispositif selon l'une quelconque des revendications 15 à 17, **caractérisé en ce que** le refroidisseur (3) de gaz de procédé et/ou le dispositif de préchauffage (2) d'eau injectée présente(nt) uniquement les serpentins (18, 19, 20, 24) prévus pour le fonctionnement stationnaire, ces serpentins étant reliés à une source de fluide caloporteur de telle sorte que ces serpentins peuvent être alimentés en fluide caloporteur pendant le démarrage et/ou l'évacuation de l'installation pour chauffer le gaz de procédé s'écoulant à travers le refroidisseur (3) de gaz de procédé et/ou le dispositif de préchauffage (2) d'eau injectée.

19. Dispositif selon l'une quelconque des revendications 15 à 18, **caractérisé en ce que** le transfert de l'énergie thermique produite dans l'échangeur thermique (5, 4) a lieu du côté gaz résiduel entre la tour d'absorption et la purification de gaz résiduel de l'installation d'acide nitrique.

20. Dispositif selon l'une quelconque des revendications 15 à 19, **caractérisé en ce qu'**il comprend au moins une turbine (11) de gaz résiduel présentant au moins deux étages.
